# EUROPÄISCHE PATENTANMELDUNG

(11) **EP 2 394 733 A1**
(43) Veröffentlichungstag der Anmeldung: **14.12.2011**
(21) Anmeldenummer: 11003717.3
(22) Anmeldetag: 05.05.2011
(51) Int. Cl.: B01D 65/08

(54) **Verfahren und Vorrichtung zum Filtern eines Getränketrubes**

(30) Priorität: 08.06.2010 DE 102010023020
(71) Anmelder: BOKELA Ingenieurgesellschaft für Mechanische Verfahrenstechnik mbH, 76131 Karlsruhe (DE)
(72) Erfinder: Bott, Reinhard Dr.-Ing., 76337 Waldbronn (DE); Langeloh, Thomas Dr.-Ing., 69126 Heidelberg (DE)
(74) Vertreter: Wunderlich, Rainer

(57) **Zusammenfassung**

Die Erfindung betrifft ein Verfahren und eine Vorrichtung zum Filtern eines Getränketrubes, bei dem der Trub mittels eines Filterelementes mit Filtermedium und einer anliegenden Druckdifferenz zu einem Retentat aufkonzentriert wird und ein das Filtermedium durchlaufenes Permeat abgeführt wird. Nach der Erfindung ist als Filtermedium eine Filtermembran vorgesehen. Weiterhin wird eine Retentatseite des Filterlementes zum Lösen von an die Filtermembran anfiltriertem Retentat von einem Streichelement überstrichen.

## Beschreibung

Die Erfindung betrifft zum einen ein Verfahren zum Filtern eines Getränketrubes, insbesondere für die Saft-, Wein- oder Bierherstellung, bei dem der Trub mittels eines Filterelementes mit Filtermedium und einer anliegenden Druckdifferenz zu einem Retentat aufkonzentriert wird und ein das Filtermedium durchlaufendes Permeat abgeführt wird.

Zum anderen betrifft die Erfindung eine Vorrichtung zum Filtern eines Getränketrubes mit einem Gehäuse, welches einen Aufnahmeraum zum Aufnehmen des Trubes umfasst, und mindestens einem Filterelement mit einem Filtermedium, welches eine Retentatseite und eine Permeatseite aufweist.

Bei der Getränkeherstellung aus natürlichen Ausgangsstoffen, insbesondere bei der Saft-, Wein- oder Bierherstellung, entsteht als ein Zwischenprodukt ein Trub, welcher auch als Saft-, Wein- oder Mosttrub oder allgemein als Getränketrub bezeichnet wird. Derartige Trube weisen einen relativ hohen Feststoffgehalt auf, welcher für eine gewünschte Qualität und auch die Haltbarkeit des Getränkes weitgehend entfernt werden soll. Die Behandlung des Trubes bei der Reduktion des Feststoffanteils ist sowohl für die Ausbeute als auch für die Qualität des herzustellenden Getränkes maßgeblich.

Für eine gute Ausbeute ist es einerseits angestrebt, einen möglichst großen Anteil Feststoff mit geringer Restfeuchte zu entfernen. Andererseits besteht jedoch das Problem, dass mit einer starken Reduktion der Feststoffbestandteile auch für den Geschmack des Getränkes bestimmende und vorteilhafte Anteile mit entfernt werden.

Eine Vorrichtung zur Behandlung eines Getränketrubes ist beispielsweise aus der EP 0 425 725 B1 bekannt.

Der Erfindung liegt die Aufgabe zugrunde, ein Verfahren und eine Vorrichtung zum Filtern eines Getränketrubes anzugeben, mit welchem in besonders effizienter Weise eine hohe Aufkonzentrierung des Trubes bei einer quantitativ und qualitativ guten Permeatausbeute ermöglicht wird.

Die Aufgabe wird zum einen durch ein Verfahren mit den Merkmalen des Anspruchs 1 und zum anderen durch eine Vorrichtung mit den Merkmalen des Anspruchs 6 gelöst. Bevorzugte Ausgestaltungen sind in den jeweils abhängigen Ansprüchen angegeben.

Das erfindungsgemäße Verfahren ist dadurch gekennzeichnet, dass als Filtermedium eine Filtermembran eingesetzt wird und dass eine Retentatseite des Filterelements zum Lösen von an der Filtermembran anfiltriertem Retentat von einem Streichelement überstrichen wird.

Ein erster Aspekt der Erfindung besteht darin, ein feinporiges Filtermedium einzusetzen, welches für eine Mikrofiltration oder Ultrafiltration geeignet ist. Eine Filtermembran im Sinne der Erfindung ist ein derartiges Filtermedium, welches vorzugsweise aus einem geschäumten Kunststoff oder einer feinporigen Keramik besteht. Derartige Membrane weisen Poren mit einem Durchmesser im p-Meter-Bereich auf, insbesondere im Bereich von etwa 0,45 µm. Auf diese Weise können Grobbestandteile, etwa Hefen, Schwebstoffe, Bakterien, rückgehalten werden, während für Geschmack und Qualität wertgebende Stoffe, wie Aromen, Farbstoffe, Phenole und Eiweiße, die Membran passieren können.

Dabei besteht ein weiterer Aspekt der Erfindung in der Kenntnis, dass sich die feinporigen Filtermembrane durch den hohen Feststoffanteil des Trubes grundsätzlich schnell zusetzen. Dies würde einen effizienten Filtervorgang und eine gute Ausbeute verhindern. Um dies zu erreichen, ist nach der Erfindung ein mechanisches Streichelement vorgesehen, welches die Retentatseite der Filtermembran überstreicht und so dieses laufend von anfiltriertem Feststoff befreit.

Die Bewegung des Streichelements führt auch zu einem Verrühren des Trubes, so dass der Zugang von Flüssigkeit an die Filtermembran erleichtert wird. Mit dem erfindungsgemäßen Verfahren kann so der Trub zu einen Retentat mit einem sehr hohen Feststoffanteil von 60 bis 80 % erreicht werden.

Ein besonders gutes Freihalten und ein besonders intensiver Misch- und Rühreffekt wird nach der Erfindung dadurch erreicht, dass das Streichelement als ein Rotor ausgebildet ist, welcher rotierend über das Filtermedium bewegt wird. Der Rotor kann dabei sternförmig angeordnete Rührblätter aufweisen, welche kontinuierlich während des anliegenden Filtrationsdruckes mit geringem Abstand über die empfindliche Filtermembran bewegt werden. Hierdurch wird der Anlagerung eines Feststoffkuchens an der Filtermembran von Anfang an entgegengewirkt.

Eine besonders hohe Aufkonzentrierung wird durch die Erfindung dadurch erreicht, dass ein Filterelement und ein Streichelement in einem Filtermodul zusammengefasst werden, dass mehrere Filtermodule in einem Gehäuse in Reihe hintereinander angeordnet werden und dass der Trub die mehreren Filtermodule in dem Gehäuse der Reihe nach durchläuft. Es kann so ein kontinuierlicher Filtrationsprozess eingestellt werden, wobei der Trub der Reihe nach die einzelnen Filtermodule durchläuft und in jedem Filtermodul aufkonzentriert wird. Abhängig von dem zu behandelnden Getränketrub können die Filtrationsdrücke in den einzelnen Filtrationsmodulen getrennt von einander eingestellt werden, so dass eine effiziente Aufkonzentrierung des Trubes erfolgen kann.

Besonders vorteilhaft ist es nach der Erfindung, dass sowohl an der Retentatseite als auch an einer Permeatseite des Filtermediums ein Überdruck gegenüber dem Atmosphärendruck einstellbar ist. Zur Druckeinstellung im Gehäuse kann eine entsprechende Druckpumpe vorgesehen werden. Zur Einstellung der Druckdifferenz wird innerhalb der Filterelemente über die Filtrat- bzw. Permeatleitung ein entsprechend geringerer Druck eingestellt, so dass insgesamt der gewünschte Filtrationsdifferenzdruck gegeben ist. Der Überdruck im Gehäuse sowie der Druck an der Permeatseite im Filterelement werden jedoch oberhalb des Atmosphärendruckes von etwa 1 bar eingestellt. Hierdurch wird einer Ausgasung des Trubes oder des Permeats entgegengewirkt, da dies zu einer Qualitätsbeeinträchtigung führen könnte.

Eine besonders schonende Behandlung des Trubes wird erfindungsgemäß noch dadurch erreicht, dass die Temperatur des Retentates und/oder des Permeates kontrolliert und über Kühlelemente gesteuert wird. Durch eine differenzierte Kühlung wird eine übermäßige Erwärmung des Trubes oder des Permeates verhindert. Eine übermäßige Erwärmung kann zu einer Beeinträchtigung oder zur Zerstörung von Aromen, Farbstoffen und Eiweißen führen.

Hinsichtlich der Vorrichtung ist die Erfindung dadurch gekennzeichnet, dass das Filtermedium eine Filtermembran umfasst und dass mindestens ein bewegbares Streichelement an der Retentatseite zum Überstreichen des Filtermediums angeordnet ist. Hierdurch werden die im Zusammenhang mit dem erfindungsgemäßen Verfahren beschriebenen Vorteile erreicht.

Dabei ist es nach Erfindung bevorzugt, dass das Streichelement als ein Rotor mit sternförmig angeordneten Rotorblättern ausgebildet ist, welche mit Abstand zum Filtermedium über dieses bewegbar sind. Dabei ist insbesondere bevorzugt, dass die Rotorblätter zum Erzeugen eines Druck- und Saugimpulses auf die Filtermembran zu deren Oberfläche geneigt angeordnet sind.

Trotz des Bewegens der Rotorblätter in einem kleinen Abstand zu der empfindlichen Filtermembran, wobei der Abstand beispielsweise etwa 0,5 bis 5 mm betragen kann, wird durch die Erzeugung eines schmalen Spaltes zunächst eine lokale Druckänderung an dem Filtermedium bewirkt. Durch eine Schrägstellung des Rotorblattes entgegen der Bewegungsrichtung vergrößert sich dieser Spalt zwischen Rotorblatt und Filtermembran wieder. Hierdurch wird ein Diffusoreffekt mit einem Saug-Druckimpuls auf die Filtermembran ausgeübt, so dass anfiltrierte Feststoffteilchen gelöst und verwirbelt werden.

Weiter ist erfindungsgemäß, dass ein Filterelement und ein Streichelement in einem Filtermodul zusammengefasst sind und dass mehrere Filtermodule in einem Gehäuse hintereinander angeordnet sind.

Bei dieser bevorzugten Anordnung können hohe Aufkonzentrationen des Trubes bzw. des Retentates erreicht werden. Insbesondere können auch die Streichelemente, welche als Rotoren ausgebildet sind, auf einer gemeinsamen Antriebswelle angeordnet werden. Dies erlaubt einen einfachen und gleichmäßigen Antrieb aller Streichelemente, so dass ein zuverlässiges Freihalten der Filtermembranen in den Filtermodulen erreicht wird.

Grundsätzlich kann die erfindungsgemäße Vorrichtung aus Metall, insbesondere für die Lebensmittelverarbeitung zugelassenem Edelstahl gefertigt sein. Hinsichtlich der Temperaturführung ist es nach der Erfindung jedoch besonders schonend, dass das Filterelement und/oder das Streichelement aus Kunststoff gebildet sind.

Die Erfindung wird nachfolgend anhand von bevorzugten Ausführungsbeispielen weiter beschrieben, welche stark schematisiert in den beigefügten Zeichnungen dargestellt sind. In den Zeichnungen zeigen:
Figur 1 eine schematische Ansicht einer erfindungsgemäßen Vorrichtung und
Figur 2 eine schematische Detailansicht zum erfindungsgemäßen Filtrationsverfahren.

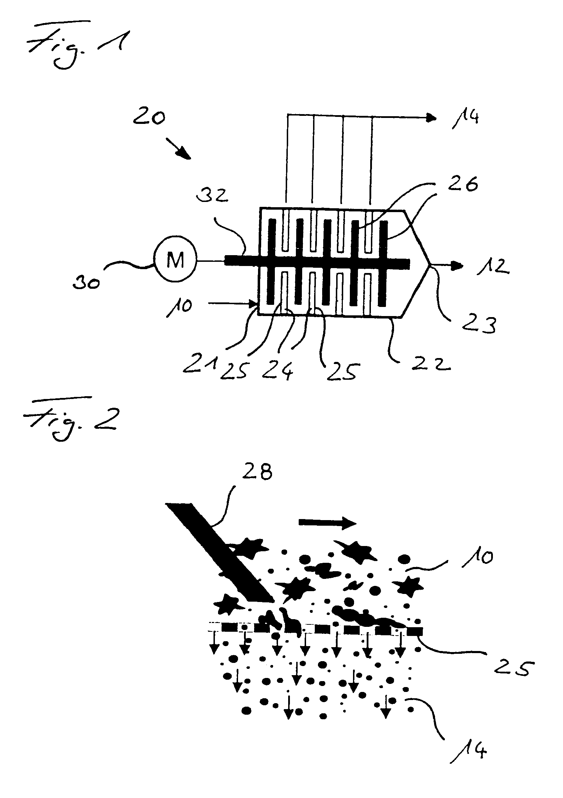

Gemäß Figur 1 ist eine erfindungsgemäße Vorrichtung mit einem zylindrischen Gehäuse 22 dargestellt. In dem Gehäuse 22 sind in einem Aufnahmeraum insgesamt die vier kreisringförmige Filterelemente 24 an der Innenseite des Gehäuses 22 angeordnet. Die scheibenförmigen Filterelemente 24 weisen Permeatkanäle auf, welche an ihrer Außenseite von einem Filtermedium 25 überdeckt sind. Das Filtermedium 25 ist nach der Erfindung eine Filtermembran, welche etwa durch Schäumen, Nadeln und/oder Weben hergestellt sein kann.

Die Filterelemente 24 weisen in ihrem Mittenbereich Durchtrittsöffnungen auf, durch welche sich eine Antriebswelle 32 erstreckt. Die Antriebswelle 32 ragt an einer Seite des Gehäuses 22 aus diesem heraus und kann über einen Motor 30, insbesondere einen Elektromotor angetrieben werden. Entlang des Umfanges der Antriebswelle 32 sind sternförmige, als Rotoren ausgebildete Streichelemente 26 angeordnet, welche bei drehend angetriebener Antriebswelle 32 die kreisringscheibenförmigen Filterelemente 24 mit den darauf angeordneten Filtermedien 25 mit Abstand überstreichen.

Über einen Einlass 21 am Gehäuse 22 kann ein Getränketrub 10, insbesondere ein Most-, Saft- oder Weintrub, kontinuierlich unter Druck in das Gehäuse 22 eingeleitet werden. Der Trub 10 durchläuft dabei die einzelnen Filtermodule, welche jeweils durch ein Filterelement 24 und einen zugeordneten Rotor gebildet sind. Aufgrund der anliegenden Filtrationsdruckdifferenz zwischen dem Aufnahmeraum innerhalb des Gehäuses 22 und der Innenseite der Filterelemente 24 durchdringt Flüssigkeit aus dem Trub 10 als Permeat 14 das jeweilige Filtermedium 25. Das Permeat 14 wird über die Permeatkanäle in den Filterelementen 24 radial nach außen zu einer Sammelleitung abgeführt und kann anschließend einer weiteren Behandlung oder zur Abfüllung geleitet werden. Entsprechend der Permeatabführung erfolgt eine Aufkonzentrierung des Trubes 10 zu einem Retentat 12, welches an einem dem Einlass 21 gegenüber liegenden Ende des Gehäuses 22 über einen Auslass 23 abgeführt wird. Das Retentat 12 kann einer Weiterverarbeitung zugeführt oder als Abfall ausgeleitet werden.

Ein Zusetzen der als Filtermedium 25 eingesetzten feinporigen Membran wird nach der Erfindung gemäß Figur 2 dadurch verhindert, dass bei dieser Ausführungsform ein Rotorblatt 28 mit einer Schrägstellung über das Filtermedium 25 bewegt wird. Die Bewegungsrichtung ist hierbei durch einen Pfeil angegeben. Die Schrägstellung des Rotorblattes 28 kann dabei auch umgekehrt sein, um einen entsprechend ungekehrten Diffusoreffekt zu bewirken. Durch den sich dabei im Spalt zwischen dem Rotorblatt 28 und dem Filtermedium 25 einstellenden Saug-Druckimpuls werden an einer Retentatseite des Filtermediums 25 angelagerte Grobpartikel gelöst und abgespült. Durch die mechanische Bewegung des Rotorblattes 28 bzw. des Streichelementes 26 wird eine sogenannte Scherspaltströmung erzeugt, welche durch ein Freihalten des Filtermediums 25 von Feststoffanlagerungen stets einen guten Durchtritt von Retentat 12 durch die feinen Poren des Filtermediums 25 ermöglicht.

Auf diese Weise wird eine sehr gute Aufkonzentrierung des Trubes 10 bei einem hohen Durchsatz und einer gleichbleibenden Trennwirkung des Filtermediums erreicht.

## Patentansprüche

1. Verfahren zum Filtern eines Getränketrubes, insbesondere für-die Saft-, Wein-oder Bierherstellung, bei dem der Trub (10) mittels eines Filterelementes (24) mit Filtermedium (25) und einer anliegenden Druckdifferenz zu einem Retentat (12) aufkonzentriert wird und ein das Filtermedium (25) durchlaufenes Permeat (14) abgeführt wird,
**dadurch gekennzeichnet,**
**dass** als Filtermedium (25) eine Filtermembran eingesetzt wird und
**dass** eine Retentatseite des Filterelementes (24) zum Lösen von an die Filtermembran anfiltriertem Retentat (12) von einem Streichelement (26) überstrichen wird.

2. Verfahren nach Anspruch 1,
**dadurch gekennzeichnet,**
**dass** das Streichelement (26) als ein Rotor ausgebildet ist, welcher rotierend über das Filtermedium (25) bewegt wird.

3. Verfahren nach Anspruch 1 oder 2,
**dadurch gekennzeichnet,**
**dass** ein Filterelement (24) und ein Streichelement (26) in einem Filtermodul zusammengefasst werden,
**dass** mehrere Filtermodule in einem Gehäuse (22) in Reihe hintereinander angeordnet werden und
**dass** der Trub (10) die mehreren Filtermodule in dem Gehäuse (22) der Reihe nach durchläuft.

4. Verfahren nach einem der Ansprüche 1 bis 3,
**dadurch gekennzeichnet,**
**dass** sowohl an der Retentatseite als auch an einer Permeatseite des Filtermediums (25) ein Überdruck gegenüber dem Atmosphärendruck eingestellt wird.

5. Verfahren nach einem der Ansprüche 1 bis 4,
**dadurch gekennzeichnet,**
**dass** die Temperatur des Retentates (12) und/oder des Permeates (14) kontrolliert und über Kühlelemente gesteuert wird.

6. Vorrichtung zum Filtern eines Getränketrubes, insbesondere zur Durchführung eines Verfahrens nach einem der Ansprüche 1 bis 5, mit
- einem Gehäuse (22), welches einen Aufnahmeraum zum Aufnehmen des Trubes (10) umfasst, und
- mindestens einem Filterelement (24) mit einem Filtermedium (25), welches eine Retentatseite und eine Permeatseite aufweist,
**dadurch gekennzeichnet,**
**dass** das Filtermedium (25) eine Filtermembran umfasst und
**dass** mindestens ein bewegbares Streichelement (26) an der Retentatseite zum Überstreichen des Filtermediums (25) angeordnet ist.

7. Vorrichtung nach Anspruch 6,
**dadurch gekennzeichnet,**
**dass** das Streichelement (26) als ein Rotor mit sternförmig angeordneten Rotorblättern (28) ausgebildet ist, welche mit Abstand zum Filtermedium (25) über dieses bewegbar sind.

8. Vorrichtung nach Anspruch 7,
**dadurch gekennzeichnet,**
**dass** die Rotorblätter (28) zum Erzeugen eines Druck- und Saugimpulses auf die Filtermembran zu deren Oberfläche geneigt angeordnet sind.

9. Vorrichtung nach einem der Ansprüche 5 bis 8,
**dadurch gekennzeichnet,**
**dass** ein Filterelement (24) und ein Streichelement (26) in einem Filtermodul zusammengefasst sind und
**dass** mehrere Filtermodule in einem Gehäuse (22) in Reihe hintereinander angeordnet sind.

10. Vorrichtung nach einem der Ansprüche 6 bis 9,
**dadurch gekennzeichnet,**
**dass** das Filterelement (24) und/oder das Streichelement (26) aus Kunststoff gebildet sind.
